(19) Europäisches Patentamt
European Patent Office
Office européen des brevets

(11) **EP 3 098 059 B1**

(12) **EUROPÄISCHE PATENTSCHRIFT**

(45) Veröffentlichungstag und Bekanntmachung des Hinweises auf die Patenterteilung:
**23.01.2019 Patentblatt 2019/04**

(51) Int Cl.:
***B29C 55/00*** *(2006.01)*　　***B29C 55/06*** *(2006.01)*
*B29K 23/00* *(2006.01)*　　*B29K 67/00* *(2006.01)*
*B29K 77/00* *(2006.01)*

(21) Anmeldenummer: **16171250.0**

(22) Anmeldetag: **25.05.2016**

(54) **VERFAHREN ZUR HERSTELLUNG EINES ORIENTIERTEN POLYMERS**

METHOD FOR PRODUCING AN ORIENTED POLYMER

PROCÉDÉ DE FABRICATION D'UN POLYMÈRE ORIENTÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2015 DE 102015108465**

(43) Veröffentlichungstag der Anmeldung:
**30.11.2016 Patentblatt 2016/48**

(73) Patentinhaber: **Technische Universität Dortmund**
**44227 Dortmund (DE)**

(72) Erfinder:
• **Tiller, Jörg Christian**
**58313 Herdecke (DE)**
• **Katzenberg, Frank**
**59425 Unna (DE)**
• **Höher, Robin**
**58135 Hagen (DE)**
• **Raidt, Thomas**
**44149 Dortmund (DE)**

(74) Vertreter: **Michalski Hüttermann & Partner**
**Patentanwälte mbB**
**Speditionstraße 21**
**40221 Düsseldorf (DE)**

(56) Entgegenhaltungen:
• **T. RAIDT; R. HÖHER; F. KATZENBERG; J. C. TILLER: "Chemical cross-linking of polypropylenes - towards new shape memory polymers", MACROMOL. RAPID COMM., Bd. 36, 2015, Seiten 744-749, XP002761294,**

**Beschreibung**

Die vorliegende Erfindung betrifft ein Verfahren zur Herstellung eines orientierten Polymers, umfassend die Schritte: A) Bereitstellen eines teilweise vernetzten Polymers; B) Erwärmen des teilweise vernetzten Polymers auf eine Temperatur, welche in Bezug auf den Schmelzpunkt $T_m$ des teilweise vernetzten Polymers $\geq T_m$ - 20 °C bis $\leq T_m$ + 30 °C beträgt; C) Uniaxiales Verstrecken des nach Schritt B) vorliegenden erwärmten Polymers bei einer Temperatur von $\geq T_m$ - 40 °C bis $\leq T_m$ + 30 °C und D) Tempern des nach Schritt C) erhaltenen verstreckten Polymers, wobei das Polymer in Verstreckungsrichtung unter Spannung gehalten wird und das Tempern bei einer Temperatur von $T_m$ - 60 °C bis < $T_m$ für eine vorbestimmte Zeitdauer von $\geq 1$ Sekunde erfolgt. Die Erfindung betrifft ebenfalls ein durch das Verfahren erhältliches bi- oder multiaxial orientiertes Polymer und dessen Verwendung als Konstruktionsmaterial.

Biaxial orientierte Polymergefüge sind in der wissenschaftlichen Literatur bekannt. Es seien als Beispiele die folgenden Veröffentlichungen genannt: Yamada, K.; Matsumoto, S.; Tagashira, K.; Hikosaka, M.; Isotacticity dependence of spherulitic morphology of isotactic polypropylene Polymer 1998, 39, 5327; Gahleitner, M. et al., Nucleation of polypropylene homo- and copolymers Intern. Polymer Processing XXVI 2011; Petermann, J.; Xu, Y.; The origin of heteroepitaxy in the system of uniaxially oriented isotactic polypropylene and polyethylene Journal of Materials Science 1991, 26, 1211-1215.

Im industriellen Maßstab werden solche Gefüge bislang durch zeitgleiche oder aufeinanderfolgende Kalt- oder Warmverformungsschritte hergestellt. Von wirtschaftlichem Interesse ist insbesondere biaxial orientiertes isotaktisches Polypropylen.

Biaxial orientierte Polypropylenfolien (BOPP) werden als Verpackungsfolien in den verschiedensten Anwendungen eingesetzt. Polypropylenfolien zeichnen sich durch viele vorteilhafte Gebrauchseigenschaften wie eine hohe Transparenz, Glanz, Barriere gegen Wasserdampf, gute Bedruckbarkeit, Steifigkeit, Durchstoßfestigkeit etc. aus. Neben den transparenten Folien haben sich opake Polypropylenfolien in den vergangenen Jahren sehr erfolgreich entwickelt. Zum einen ist die besondere Optik (Opazität und Weißgrad) dieser Folien für einige Anwendungen besonders wünschenswert. Zum anderen bieten opake Folien dem Anwender eine höhere Ausbeute auf Grund der reduzierten Dichte dieser Folien. In einigen Anwendungen trägt die vakuolenhaltige Basisschicht zu einer weiteren Verbesserung von gewünschten Folieneigenschaften bei.

Die Herstellung von biaxial orientierten Polypropylenfolien wird im Stand der Technik vielfach beschrieben. DE 199 469 49 A1 offenbart eine Vorrichtung zur kontinuierlichen Herstellung einer biaxial verstreckten Folie aus einem thermoplastischen Kunststoff mit mindestens einem Extruder und einer Ringspaltdüse für die Extrusion eines Primärschlauchs des thermoplastischen Kunststoffs, einer Abzugs- und Abkühleinrichtung für den Primärschlauch, einer nachfolgenden Heizeinrichtung zum Aufheizen des abgekühlten Primärschlauchs auf eine Blasformgebungstemperatur und einer Einrichtung zum Aufblasen des aufgeheizten Primärschlauchs zu einem Sekundärschlauch, der nachfolgend von einer Flachlege- und Aufwickeleinrichtung zu der Folie aufwickelbar ist. Ein den Primärschlauch ausgangsseitig der Heizeinrichtung umgebender Stabilisierungsring ist vorgesehen.

Es wird in DE 199 469 49 A1 beschrieben, dass unmittelbar nach seinem Austritt aus einer Heizeinrichtung der auf seine Blasformgebungstemperatur erwärmte Primärschlauch zu einer langgestreckten Folienblase wird, die auch als Sekundärschlauch bezeichnet wird, aufgeweitet wird, wobei der thermoplastische Kunststoff eine starke Reckung erfährt. Nachfolgend wird der aufgeweitete Sekundärschlauch von einer Flachlege- und Abzugseinrichtung mittels eines dritten Abzugswalzenpaares zu einem Folienschlauch in an sich bekannter Weise flachgelegt und auf eine bzw. nach Auftrennen des Folienschlauches auch auf Aufwickeleinrichtungen als Folie aufgewickelt. Wesentlich sei hierbei, dass die Abzugskräfte des dritten Abzugswalzenpaares, die auf den Sekundärschlauch einwirken, sich mit den Kräften während des Aufweitens vom Primärschlauchabschnitt zum Sekundärschlauch überlagern, so dass die solchermaßen hergestellte Folie eine biaxiale Verstreckung erfahre.

GB 127 6023 A1 offenbart ein Verfahren zur Herstellung einer Polypropylenfolie mit einer Dichte von 0.9 g/cm$^3$ bis 0.92 g/cm$^3$, einer Kristallinität von 40% bis 70% und einem Kristallitschmelzpunkt von 160 °C bis 165 °C durch Extrudieren von vorzugsweise isotaktischem Polypropylen bei einer Temperatur zwischen 200 °C und 300 °C, Abkühlen der Schmelze, Aufheizen der Vorfolie auf Temperaturen zwischen Kristallitschmelzpunkt und unterhalb des Kristallitschmelzpunkts liegenden Temperaturen, Verstrecken der Folie in Längs- und Querrichtung, Thermofixierung sowie Abkühlung der fertigen Folie. Die Schmelze wird auf Temperaturen zwischen 15 °C und 80 °C abgekühlt, die Vorfolie wird auf Temperaturen zwischen 40 °C und 10 °C unterhalb des Kristallitschmelzpunkts aufgeheizt und es wird in diesem Temperaturbereich die Längsstreckung mit Streckverhältnissen von 6 bis 8 vorgenommen. Die Folie wird auf Temperaturen zwischen 100 °C bis 10 °C unterhalb des Kristallitschmelzpunkts abgekühlt und auf Temperaturen zwischen 5 °C bis 20 °C oberhalb der Temperaturen bei der Längsstreckung aufgeheizt. In diesem Temperaturbereich wird die Querstreckung mit Streckverhältnissen von 6 bis 8 vorgenommen. Die Folie wird bei Temperaturen zwischen 35 °C unterhalb des Kristallitschmelzpunkts und dem Kristallitschmelzpunkt unter Spannung thermofixiert, wobei während der Thermofixierung unter Spannung eine Breitenverminderung von 2 % bis 10% vorgenommen wird und schließlich die Folie auf Temperaturen unterhalb von 50 °C abgekühlt wird.

US 5,970,589 betrifft eine Vorrichtung zum gleichzeitigen biaxialen Strecken einer Folienbahn mit einem Paar von beweglichen Trägern, die eine Vielzahl von Verbindungsgliedeinheiten, von denen jedes Klemmen zum Greifen der Ränder der kontinuierlichen Folienbahn, sowie obere Rollen und untere Rollen aufweisen. Die Vorrichtung ist ausgestattet mit einem Paar von Führungen zum Führen der beweglichen Träger, wobei jedes Paar von Führungen einen Bereich zum gleichzeitigen Strecken aufweist, auf welchem die Führungen zum Strecken der Folienbahn in eine Richtung quer zur Folienbahnlaufrichtung und zum gleichzeitigen Strecken der Folienbahn in ihrer Laufrichtung durch Beschleunigung der Folienbahn zwischen den Trägern divergieren. Jede Führung weist einen unteren Schienenaufbau zum Führen der beweglichen Träger durch die unteren Rollen und einen oberen Schienenaufbau zum Anheben und Führen der beweglichen Träger durch die oberen Rollen auf.

Die bekannten Verfahren zur Erzeugung multiaxial orientierter Gefüge erfolgen durch Dehnungen in mehreren Richtungen. Dabei muss in jedem Dehnungsschritt gegen die natürliche Relaxation des Polymers gearbeitet werden, damit die vorherige Orientierungsrichtung erhalten bleibt.

Die Verfahren des Standes der Technik können zwar prinzipiell mit jedem Thermoplasten durchgeführt werden. Nachteilig sind neben der Komplexität und/oder der Anzahl der Verfahrensschritte die nur in geringen Grenzen einstellbaren Orientierungen. Der Grund hierfür ist, dass beispielsweise beim Recken in der Schmelze Relaxationsvorgänge ablaufen, bevor die Kristallisation den niederentropischen orientierten Zustand fixieren kann. Aufgrund dessen muss, vergleichbar zur Faserherstellung, die durch Dehnung erzeugte Orientierung durch schnellstmögliche Kristallisation fixiert werden. Die besten Ergebnisse liefert das simultane biaxiale Recken hochmolekularer Polymere, da es hierbei nur zu geringem Orientierungsverlust durch Relaxationsvorgänge kommt.

Die vorliegende Erfindung hat sich die Aufgabe gestellt, die Herstellung von biaxial orientierten Polymergegenständen zu vereinfachen. Insbesondere hat sie sich die Aufgabe gestellt, ein Verfahren bereitzustellen, bei dem auf einen zweiten Streckschritt verzichtet werden kann und bei dem kein Missverhältnis zwischen Eigenschaften des Materials, welche für dessen Einsatz als Konstruktionsmaterial wichtig sind, in Verstreckungsrichtung und quer hierzu auftritt.

Erfindungsgemäß gelöst wird die Aufgabe durch ein Verfahren zur Herstellung eines orientierten Polymers, umfassend die Schritte:

A) Bereitstellen eines teilweise vernetzten Polymers,

wobei das teilweise vernetzte Polymer durch teilweises Vernetzen eines Ausgangspolymers erhalten wird,

das Ausgangspolymer als ein Polymer oder ein Blend von zwei oder mehreren Polymeren vorliegt,
das Ausgangspolymer derart ausgewählt ist, dass es in der Lage ist, kristalline Domänen auszubilden, welche durch epitaktische Kristallisation auf anderen kristallinen Domänen des Ausgangspolymers entstanden sind und in einem Winkel von $\geq 50°$ bis $\leq 130°$ zu diesen anderen kristallinen Domänen vorliegen

und das teilweise vernetzte Polymer ein Netzkettenmolekulargewicht $M_c$, bezogen auf das zahlenmittlere Molekulargewicht des Ausgangspolymers $M_N$, von $\geq 0.25\,M_N$ bis $\leq 0.5\,M_N$, aufweist;

B) Erwärmen des teilweise vernetzten Polymers auf eine Temperatur, welche in Bezug auf den Schmelzpunkt $T_m$ des teilweise vernetzten Polymers $\geq T_m$ - 20 °C bis $\leq T_m$ + 30 °C beträgt;

C) Uniaxiales Verstrecken des nach Schritt B) vorliegenden erwärmten Polymers bei einer Temperatur von $\geq T_m$ - 40 °C bis $\leq T_m$ + 30 °C;

D) Tempern des nach Schritt C) erhaltenen verstreckten Polymers, wobei das Polymer in Verstreckungsrichtung unter Spannung gehalten wird und das Tempern bei einer Temperatur von $\geq T_m$ - 60 °C bis $< T_m$ für eine vorbestimmte Zeitdauer von $\geq 1$ Sekunde erfolgt.

Im erfindungsgemäßen Verfahren wird ein nach üblichen Maßstäben als "leicht" vernetzt bezeichnetes Polymer zunächst gedehnt. Aufgrund der "leichten" Vernetzung kann die nach der Dehnung des plastifizierten Polymers einsetzende Relaxation ganz oder weitestgehend vermieden werden. Es wird angenommen, dass bedingt durch die Netzkettenmolekulargewichtsverteilung innerhalb des Polymers ein Teil der Makromoleküle parallel zur Dehnungsrichtung kristallisiert. Ein anderer Teil der Makromoleküle kann dann auf den bereits in Dehnungsrichtung gebildeten Kristallen epitaktisch aufwachsen. Auf diese Weise kann durch eine uniaxiale Dehnung eine biaxiale Orientierung erhalten werden.

Es wurde weiterhin gefunden, dass durch das erfindungsgemäße Verfahren erhaltene Material annähernd gleiche Elastizitätsmodule in Verstreckungsrichtung und quer hierzu aufweist.

Im Gegensatz zu den bisher bekannten Verfahren zur Herstellung biaxial orientierter Polymere sind für das erfindungsgemäße Verfahren keine zusätzlichen Prozess-Schritte nötig, um eine mehrachsige Orientierung zu erreichen.

Diese entsteht allein durch die uniaxiale Dehnung.

Damit ermöglicht das erfindungsgemäße Verfahren die Herstellung von multiaxial orientierten Polymerfolien mit konventionellen Anlagen zur Folienextrusion. Zudem sind, abhängig vom Epitaxieverhalten des Polymers, mehr als zwei Orientierungsrichtungen denkbar.

Verglichen mit dem Stand der Technik gibt es weite Fenster für Prozessparameter zur Erzeugung der bi- oder multiaxialen Gefüge, da aufgrund der leichten Vernetzung die bei Thermoplasten einsetzende Relaxation nicht beziehungsweise nur in stark abgeschwächter Form zum Tragen kommt.

Im Gegensatz zu bekannten vernetzten Thermoplasten lassen sich die erfindungsgemäß eingesetzten leicht vernetzten Polymere weiterhin mit Standardverfahren wie Extrusion oder Spritzguss verarbeiten, so dass die Vernetzung bereits nach der Polymersynthese durchgeführt und das Polymer in pelletierter Form vertrieben werden kann.

Das erfindungsgemäße Verfahren geht in Schritt A) von einem teilweise vernetzten Polymer aus, welches aus einem Ausgangspolymer erhalten wird. Das Ausgangspolymer kann ein Polymer (hierunter fallen auch Copolymere) oder ein Blend von zwei oder mehreren Polymeren (oder Copolymeren) sein. Selbstverständlich können in dem Ausgangspolymer auch Hilfs- und Zusatzstoffe vorhanden sein.

Das Ausgangspolymer wird danach ausgewählt, ob es bei der Kristallisation ein epitaktisches Verhalten zeigt, bei dem Kristallite in einem bestimmten Winkelbereich, der für die Anwendung des Polymers als mindestens biaxial orientiertes Polymer als erforderlich angesehen wird, auf anderen Kristalliten aufwachsen. Wenn das Ausgangspolymer ein einziges Polymer, beispielsweise isotaktisches Polypropylen, ist, wachsen iPP-Kristallite auf anderen iPP-Kristalliten auf. Dieses wird auch als homoepitaktisches Verhalten bezeichnet. Im Fall von Polymer-Blends für das Ausgangspolymer ist sowohl ein homoepitaktisches Verhalten von einer oder mehreren Komponenten des Blends als auch ein heteroepitaktisches Verhalten der Komponenten denkbar. Beispiele für Polymer-Blends sind Blends umfassend Polyethylenterephthalat und Polyamid 12 oder Blends umfassend isotaktisches Polypropylen und Polyethylen.

Durch den geringen Vernetzungsgrad des Polymers wird angenommen, dass dieses epitaktische Kristallisationsverhalten nicht oder nur unwesentlich gestört wird. Das Polymer ist in praktischer Hinsicht leichter auszuwählen, wenn man von den literaturbekannten oder experimentell selbst ermittelbaren Eigenschaften des Ausgangspolymers beziehungsweise der Komponenten des Ausgangspolymers ausgeht.

Als Beispiel sei isotaktisches Polypropylen genannt, bei dem in der $\alpha$-Phase Lamellen in einem Winkel von ca. 80° epitaktisch aufeinander angeordnet vorliegen können. Liegen auch noch Lamellen in der $\gamma$-Phase vor, können diese in einem Winkel von ca. 40° auf den Lamellen der $\alpha$-Phase epitaktisch aufeinander angeordnet vorliegen.

Die teilweise Vernetzung des Ausgangspolymers kann durch physikalische Prozesse wie Strahleneinwirkung oder durch chemische Reaktionen, insbesondere Radikalreaktionen, erfolgen.

Bevorzugt sind chemische Prozesse, da sich diese in einem Extruder durchführen lassen.

Erfindungsgemäß ist es vorgesehen, dass das teilweise vernetzte Polymer ein Netzkettenmolekulargewicht Mc von $\geq$ 0.25 $M_N$ bis $\leq$ 0.5 $M_N$ aufweist. Hierbei ist das zahlenmittlere Molekulargewicht des Ausgangspolymers $M_N$ ermittelbar mittels Gelpermeationschromatographie mit THF als Eluent gegen Polystyrolstandards (DIN 55672). Das Netzkettenmolekulargewicht Mc der Polymernetzwerke wird mit Hilfe der Mooney-Rivlin Gleichung (1) für einachsige Belastung bestimmt, wobei $\lambda$ den Verstreckungsfaktor (Verhältnis von Längenausdehnung zu ursprünglicher Länge) ausdrückt:

$$\sigma_N = \left(2C_1 + \frac{2C_2}{\lambda}\right)\left(\lambda - \frac{1}{\lambda^2}\right) \tag{1}$$

Hier hängt $2C_1$ mit dem Schubmodul G (Gleichung 2) zusammen und beschreibt damit den Einfluss des kovalenten Netzwerkes, wohingegen der Koeffizient $2C_2$ Verschlaufungen, Molmassenverteilungen und freie Kettenenden berücksichtigt. Unter Berücksichtigung der Theorie der Gummielastizität für kovalente Netzwerke mit einer Funktionalität von f = 4 ergibt sich die Korrelation von Schubmodul und dem Netzkettenmolekulargewicht wie folgt:

$$2C_1 = G = \rho RT \left(\frac{1}{M_C} - \frac{2}{M_N}\right) \tag{2}$$

Hier ist $T$ die absolute Temperatur, $p$ die Dichte des Polymers, R die allgemeine Gaskonstante (8.314 J mol$^{-1}$ K$^{-1}$) und $M_N$ das Zahlenmittlere Molekulargewicht des Ausgangspolymers (ermittelbar mittels Gelpermeationschromatographie mit THF als Eluent gegen Polystyrolstandards; DIN 55672). Zur Bestimmung des Mooney-Rivlin Plots können Proben der Größe $l$ = 20 mm, $b$ = 3 mm, $d$ = 1 mm mittels dynamisch-mechanischer Analyse (DMA) vermessen werden.

Dazu wird eine Film-Tension Klemme verwendet. Bei der Messung wird bei einer konstanten Temperatur oberhalb der Schmelztemperatur alle 20 Minuten die aufgegebene Kraft um 0.01 N erhöht. Durch die sukzessive Krafterhöhung haben physikalische Netzpunkte wie Verschlaufungen Zeit sich zu lösen und es wird das rein chemische Netzwerk gemessen. Die Kraft wird so oft erhöht bis eine Dehnung von 400% erreicht ist. Zur Bestimmung der Koeffizienten $2C_1$ und $2C_2$ wird die Mooney-Rivlin Gleichung in einen linearen Zusammenhang zwischen der reduzierten Spannung $\sigma^* = \sigma N \cdot (\lambda - \lambda^{-2})^{-1}$ und der reziproken Verlängerung $\lambda^{-1}$ überführt.

$$\sigma^* = \left( 2C_1 + \frac{2C_2}{\lambda} \right) \qquad (3)$$

Durch eine lineare Regression des Mooney-Rivlin-Plots zwischen einer Verlängerungen von $1,5 < \lambda < 2,5$ ergeben sich $2C_1$ aus dem Ordinatenabschnitt und $2C_2$ aus der Steigung. Mit der Kenntnis dieser Parameter lässt sich $M_C$ bestimmen.

Es ist bevorzugt, dass Mc in einem Bereich von $\geq 0.3\, M_N$ bis $\leq 0.495\, M_N$, mehr bevorzugt von $\geq 0.333\, M_N$ bis $\leq 0.494\, M_N$, liegt.

Im Schritt B) des erfindungsgemäßen Verfahrens wird das teilweise vernetzte Polymer auf eine Temperatur erwärmt, welche eine plastische Verformung des Polymers zulässt. Vorzugsweise beträgt diese Temperatur in Bezug auf den Schmelzpunkt $T_m$ des teilweise vernetzten Polymers $\geq T_m - 10\, °C$ bis $\leq T_m + 25\, °C$. Der Schmelzpunkt $T_m$ des Polymers kann mittels DSC (EN ISO 11357-1, DIN 53765) bestimmt werden. Liegt ein Polymerblend vor, bezieht sich $T_m$ auf den höchsten Schmelzpunkt der Polymere des Blends.

Es wird angenommen, dass durch die Begrenzung der Temperatur auf einen Wert, der nicht viel höher als der Schmelzpunkt des Polymers ist, ein Teil der kristallinen Domänen des Polymers noch nicht aufgeschmolzen sind. Diese Domänen stehen dann für eine Orientierung durch Verstreckung im nachfolgenden Schritt direkt zur Verfügung. Es ist insbesondere vorteilhaft, wenn die Zeitspanne zwischen den Schritten B) und C) möglichst gering ist. Idealerweise wird Schritt C) unmittelbar im Anschluss an Schritt B) durchgeführt.

Gemäß Schritt C) des erfindungsgemäßen Verfahrens erfolgt eine uniaxiale Verstreckung des zuvor erwärmten Polymers. Hierbei erfolgt die Orientierung der im erwärmten Polymer noch vorliegenden kristallinen Domänen parallel zur Verstreckungsrichtung. Vorzugsweise beträgt die Temperatur, bei der verstreckt wird, in Bezug auf den Schmelzpunkt $T_m$ des teilweise vernetzten Polymers $\geq T_m - 10\, °C$ bis $\leq T_m + 25\, °C$.

Bei der Verstreckung in Schritt C) wird das durch die teilweise Vernetzung des Polymers erhaltene lose Netzwerk gedehnt und auf Spannung gehalten. Im Gegensatz zu unvernetzten Polymeren wird die Dehnung jedoch beibehalten.

Zur epitaktischen Kristallisation auf den parallel zur Verstreckungsrichtung ausgerichteten kristallinen Domänen wird in Schritt D) des erfindungsgemäßen Verfahrens das verstreckte Polymer getempert, wobei das Polymer in Verstreckungsrichtung unter Spannung gehalten wird. Durch das Aufrechterhalten der Spannung wird die Orientierung der in Verstreckungsrichtung ausgerichteten kristallinen Domänen beibehalten. Das Tempern erfolgt in einem bestimmten Temperaturbereich unterhalb des Schmelzpunkts für eine bestimmte Zeitdauer, damit genug Zeit für die Kristallisation in einer weiteren Raumrichtung bleibt. Insofern unterscheidet sich dieser Schritt von Abkühlungsschritten bei der Herstellung von monoaxial orientierten Polymeren, bei denen eine rasche Abkühlung auf Raumtemperatur erfolgt. Vorzugsweise beträgt die vorbestimmte Zeitdauer in Schritt D) $\geq 1$ Sekunde bis $1000 \leq$ Sekunden, mehr bevorzugt $\geq 2$ Sekunden bis $100 \leq$ Sekunden. Die Temperatur in Schritt D) beträgt vorzugsweise $\geq T_m - 50\, °C$ bis $< T_m$ und mehr bevorzugt $\geq T_m - 45\, °C$ bis $< T_m$.

Ausführungsformen und weitere Aspekte der vorliegenden Erfindung werden nachfolgend geschildert. Sie können beliebig miteinander kombiniert werden, sofern sich aus dem Kontext nicht eindeutig das Gegenteil ergibt.

In einer Ausführungsform des erfindungsgemäßen Verfahrens ist in Schritt A) das teilweise vernetzte Polymer ein teilweise vernetztes isotaktisches Polypropylen. Zu dessen Herstellung wird vorzugsweise ein isotaktisches Polypropylen mit einem zahlenmittleren Molekulargewicht von $\geq 50000$ g/mol bis $\leq 100000$ g/mol, mehr bevorzugt $\geq 70000$ g/mol bis $\leq 90000$ g/mol (ermittelbar mittels Gelpermeationschromatographie mit THF als Eluent gegen Polystyrolstandards; DIN 55672) eingesetzt. Der Polydispersitätsindex PDI des als Ausgangspolymer eingesetzten iPP beträgt vorzugsweise $\geq 3$ bis $\leq 6$, mehr bevorzugt $\geq 4$ bis $\leq 5$.

In einer weiteren Ausführungsform des erfindungsgemäßen Verfahrens wird das teilweise vernetzte isotaktische Polypropylen erhalten durch Umsetzung von isotaktischem Polypropylen mit einem Peroxid und einem cyclischen ungesättigten Carbonsäureanhydrid, gefolgt von der Umsetzung des erhaltenen Zwischenprodukts mit Glycidyl(meth)acrylat und Tetramethylthiuramdisulfid in Gegenwart von Zinkoxid. Geeignet sind insbesondere Dicumylperoxid und Maleinsäureanhydrid. Dieses Vernetzungsprotokoll hat sich als eine sehr effiziente Methode zur Vernetzung von iPP erwiesen.

In einer weiteren Ausführungsform des erfindungsgemäßen Verfahrens wird in Schritt C) das Polymer um $\geq$ 100% bis $\leq 800$% seiner ursprünglichen Ausdehnung in Verstreckungsrichtung verstreckt. Vorzugsweise beträgt diese Verstreckung $\geq 150$% bis $\leq 700$%, mehr bevorzugt $\geq 200$% bis $\leq 600$%. Eine angegebene Verstreckung um 100% bedeutet eine Längenzunahme um 100% der ursprünglichen Länge. Es hat sich gezeigt, dass durch das Ausmaß der Verstreckung auch das Verhältnis von in Verstreckungsrichtung und in einer anderen Richtung orientierten Kristallite im erhaltenen Material beeinflusst werden kann.

Ein Vorteil des erfindungsgemäßen Verfahrens ist, dass die Dicke des verarbeiteten Polymers deutlich größer sein kann als die herkömmlichen Verfahren zur Herstellung biaxial orientierter Polymere, welche in der Regel zur Folienherstellung eingesetzt werden. Daher wird in einer weiteren Ausführungsform des erfindungsgemäßen Verfahrens in Schritt C) das Polymer auf eine Dicke von $\geq 0.01$ mm bis $\leq 1$ m verstreckt. Vorzugsweise beträgt die Dicke $\geq 0.025$ mm bis $\leq 500$ mm, besonders bevorzugt $\geq 0.05$ mm bis $\leq 100$ mm.

In einer weiteren Ausführungsform des erfindungsgemäßen Verfahrens wird in Schritt D) das verstreckte Polymer unter Spannung um $\geq 100\%$ bis $\leq 1500\%$ seiner ursprünglichen Ausdehnung in Verstreckungsrichtung gehalten. Vorzugsweise beträgt diese Verstreckung $\geq 150\%$ bis $\leq 700\%$, mehr bevorzugt $\geq 200\%$ bis $\leq 600\%$. Eine angegebene Verstreckung um 100% bedeutet eine Längenzunahme um 100% der ursprünglichen Länge.

Es ist bevorzugt, dass das Ausmaß der Verstreckung in den Schritten C) und D) gleich ist, das heißt dass in Schritt D) keine erneute Längenänderung des Polymers eintritt.

In einer weiteren Ausführungsform des erfindungsgemäßen Verfahrens wird nach Schritt D) das Polymer auf Raumtemperatur abgekühlt.

Ein weiterer Gegenstand der vorliegenden Erfindung ist ein bi- oder multiaxial orientiertes Polymer, erhältlich durch ein erfindungsgemäßes Verfahren, wobei das Polymer teilweise vernetzt ist, ein Netzkettenmolekulargewicht Mc, bezogen auf das zahlenmittlere Molekulargewicht seines unvernetzten Ausgangspolymers $M_N$, von $\geq 0.25\,M_N$ bis $\leq 0.5\,M_N$, aufweist und ein Verhältnis des Elastizitätsmoduls in Verstreckungsrichtung zum Elastizitätsmodul quer zur Verstreckungsrichtung von $\geq 0.7{:}1$ bis $\leq 1.5{:}1$ aufweist.

Das Netzkettenmolekulargewicht wird, wie vorstehend bereits beschrieben, mit dynamisch-mechanischer Analyse unter Verwendung der Mooney-Rivlin-Gleichung bestimmt. Es ist bevorzugt, dass Mc in einem Bereich von $\geq 0.3\,M_N$ bis $\leq 0.495\,M_N$, mehr bevorzugt von $\geq 0.333\,M_N$ bis $\leq 0.494\,M_N$, liegt. Das Polymer, welches auch ein Polymer-Blend sein kann, ist beispielsweise iPP oder ein Blend umfassend Polyethylenterephthalat und Polyamid 12 oder ein Blend umfassend iPP und Polyethylen. Selbstverständlich können in dem Polymer auch Hilfs- und Zusatzstoffe vorhanden sein. Die Elastizitätsmodun können auf einem Gerät vom Typ DMA 2980 (TA Instruments) ermittelt werden (Film-Tension Clamp, Multifrequency-Mode, Probendimensionen 30 mm x 2 mm x 1 mm, Heizrampe 5 K/min, Preload-Force 4 N, Frequency 1 Hz, Amplitude 10 $\mu$m, Temperaturbereich 20 °C bis 70 °C. Vorzugsweise beträgt das Verhältnis der E-Moduln $\geq 0.75{:}1$ bis $\leq 1.45{:}1$, mehr bevorzugt $\geq 0.8{:}1$ bis $\leq 1.4{:}1$.

In einer Ausführungsform liegt das Polymer als Formkörper mit einer Dicke von $\geq 0.01$ mm bis $\leq 1$ m vor. Vorzugsweise beträgt die Dicke $\geq 0.025$ mm bis $\leq 500$ mm, besonders bevorzugt $\geq 0.05$ mm bis $\leq 100$ mm.

In einer weiteren Ausführungsform ist das Polymer ein isotaktisches Polypropylen. Zu dessen Herstellung wird vorzugsweise ein isotaktisches Polypropylen mit einem zahlenmittleren Molekulargewicht von $\geq 50000$ g/mol bis $\leq 100000$ g/mol, mehr bevorzugt $\geq 70000$ g/mol bis $\leq 90000$ g/mol (ermittelbar mittels Gelpermeationschromatographie mit THF als Eluent gegen Polystyrolstandards;) eingesetzt. Der Polydispersitätsindex PDI des als Ausgangspolymer eingesetzten iPP beträgt vorzugsweise $\geq 3$ bis $\leq 6$, mehr bevorzugt $\geq 4$ bis $\leq 5$.

Vorzugsweise beträgt im Weitwinkel-Röntgenstreuungsdiagramm (Cu-Ka) das Integralverhältnis der Schar an Äquatorreflexen (hk0) von Kristalliten, welche in einem Winkel von $\geq 50°$ bis $\leq 130°$ zur Verstreckungsrichtung orientiert sind, zur Schar an Äquatorreflexen (hk0) von Kristalliten, welche in Verstreckungsrichtung orientiert sind, $\geq 0.8{:}1$ bis $\leq 4{:}1$. Im Fall des isotaktischen Polypropylens handelt es sich jeweils um die (110)-Reflexe. Vorzugsweise beträgt das Verhältnis $\geq 0.85{:}1$ bis $\leq 3.5{:}1$, mehr bevorzugt $\geq 0.9{:}1$ bis $\leq 3{:}1$.

Es ist auch bevorzugt, dass das isotaktische Polypropylen vernetzt wird durch Umsetzung von isotaktischem Polypropylen mit einem Peroxid und einem cyclischen ungesättigten Carbonsäureanhydrid, gefolgt von der Umsetzung des erhaltenen Zwischenprodukts mit Glycidyl(meth)acrylat und Tetramethylthiuramdisulfid in Gegenwart von Zinkoxid. Geeignet sind insbesondere Dicumylperoxid und Maleinsäureanhydrid. Dieses Vernetzungsprotokoll hat sich als eine sehr effiziente Methode zur Vernetzung von iPP erwiesen.

Die vorliegende Erfindung betrifft ferner die Verwendung eines erfindungsgemäßen Polymers als Konstruktionsmaterial. Das Konstruktionsmaterial kann beispielsweise eine Polymerplatte zum Einsatz beim Hausbau sein. Die Dicke der Polymerschicht kann beispielsweise $\geq 0.01$ mm bis $\leq 1$ m betragen. Vorzugsweise beträgt die Dicke $\geq 0.025$ mm bis $\leq 500$ mm, besonders bevorzugt $\geq 0.05$ mm bis $\leq 100$ mm.

Die vorliegende Erfindung wird anhand der nachfolgenden Figuren und Beispiele näher erläutert, ohne jedoch darauf beschränkt zu sein. Es zeigen:

FIG. 1      ein WAXS-Beugungsbild einer nicht erfindungsgemäßen Probe

FIG. 2      ein WAXS-Beugungsbild einer erfindungsgemäßen Probe

FIG. 3      ein WAXS-Beugungsbild einer nicht erfindungsgemäßen Probe

Für dynamisch-mechanische Analysen wurde ein Gerät vom Typ DMA 2980 (TA Instruments) eingesetzt. Das Netzkettenmolekulargewicht Mc des vernetzten Polymers wurde mit diesem Gerät und anhand der Mooney-Rivlin-Gleichung ermittelt, wie vorstehend bereits ausgeführt wurde. Der Schmelzpunkt $T_m$ wurde mittels DSC auf einem Gerät vom Typ DSC 2910 bestimmt.

Weitwinkel-Röntgenstreuungsdiagramme (WAXS, wide angle X-ray scattering) wurden auf einem VANTEC-2000-Detektor und einer Mikrofokus-Röntgenquelle (I$\mu$S, Incoatec GmbH) mit einer Cu-Anode und integrierter Montel-Optik bei 50 kV und 0.600 mA (Bruker Nanostar) aufgenommen. Die Wellenlänge der Röntgenstrahlung betrug 1.5406 Å. Der Abstand zwischen Probe und Detektor betrug 4.6 cm, die Akkumulationszeit für jedes Frame betrug 900 Sekunden und der Streuwinkel wurde gegen $Al_2O_3$-Standards kalibriert.

Der Elastizitätsmodul der Polymerproben wurde auf einem Gerät vom Typ DMA 2980 (TA Instruments) gemessen. (Film-Tension Clamp, Multifrequency-Mode, Probendimensionen 30 mm x 2 mm x 1 mm, Heizrampe 5 K/min, Preload-Force 4 N, Frequency 1 Hz, Amplitude 10 $\mu$m, Temperaturbereich 20 °C bis 70 °C)

Beispiel 1 (Vergleichsbeispiel)

Für dieses Vergleichsbeispiel wurde unvernetztes isotaktisches Polypropylen vom Typ Novolen 1100 H (Targor GmbH) mit einem zahlenmittleren Molekulargewicht von 80000 g/mol und einem Polydispersitätsindex PDI von 5.0 eingesetzt. Der Schmelzpunkt dieses Polymers (DSC) betrug 168 °C.

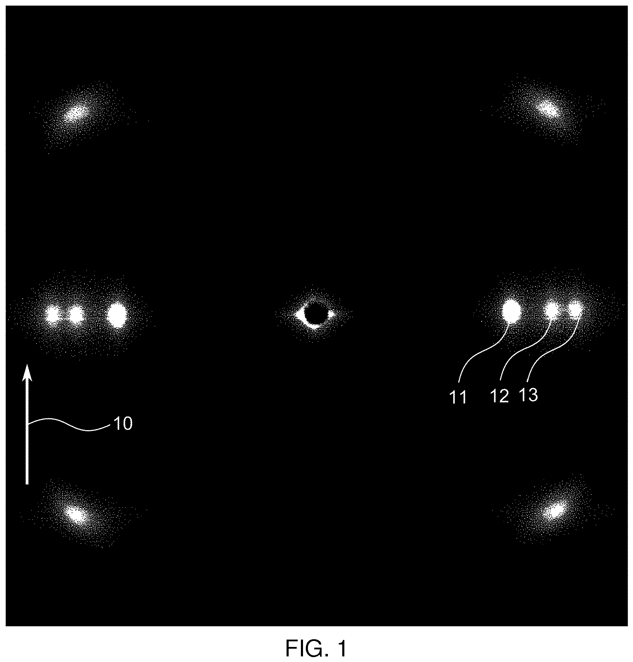

Das isotaktische Polypropylen wurde bei einer Temperatur von 90 °C uniaxial um 600% gedehnt. Das in FIG. 1 gezeigte WAXS-Beugungsbild zeigt entlang der Verstreckungsrichtung 10 anhand der Reflexe 11, 12 und 13 eine uniaxiale Ausrichtung von Kristalliten im Polymer.

Ohne auf eine Theorie festgelegt zu sein wird angenommen, dass der Reflex mit dem Bezugszeichen 11 der (110)-Netzebene der in Verstreckungsrichtung orientierten Kristallite zuzuordnen ist. Der Reflex mit dem Bezugszeichen 12 ist der (040)-Netzebene und der Reflex mit dem Bezugszeichen 13 der (130)-Netzebene zuzuordnen.

Beispiel 2 (erfindungsgemäß):

Im erfindungsgemäß gefordertem Umfang vernetztes isotaktisches Polypropylen für dieses Beispiel wurde erhalten, indem das Novolen 1100 H, welches auch für das Vergleichsbeispiel (Beispiel 1) verwendet wurde, mit 1.5 Gewichts-% Dicumylperoxid und 3 Gewichts-% Maleinsäureanhydrid in einem Doppelschneckenextruder (DSM Research) bei 180 Umdrehungen/Minute und 200 °C für 120 Sekunden zur Reaktion gebracht wurde. Anschließend wurden 5 Gewichts-% ZnO, 2 Gewichts-% Glycidylmethacrylat und 2 Gewichts-% Tetramethylthiuramdisulfid hinzugefügt und es wurde für weitere 120 Sekunden gemischt. Nach der Extrusion wurde die erhaltene Mischung in einer beheizbaren Presse unter Luftausschluss bei 180 °C für 40 Minuten ausgehärtet. Der Schmelzpunkt dieses Polymers (DSC) betrug 155 °C, das Netzkettenmolekulargewicht Mc 39500 g/mol, der Mooney-Rivlin-Koeffizient 2*C*1 0.00093 und der Mooney-Rivlin-Koeffizient 2*C*2 0.0098.

Das wie zuvor beschrieben erhaltene teilweise vernetzte isotaktische Polypropylen wurde auf 180 °C erwärmt und bei dieser Temperatur uniaxial um 600% gedehnt. Die zum Dehnen erforderliche Dehnspannung wurde aufrechterhalten, die Temperatur wurde auf 110 °C gesenkt und man ließ bei dieser Dehnspannung und dieser Temperatur das Polymer für 120 Sekunden gedehnt (Temperungsschritt).

Diese Versuchsanordnung unterscheidet sich durch den geringeren Vernetzungsgrad, die geringere Dehnungstemperatur, den geringeren Dehnungsgrad und den Temperungsschritt von dem Material, welches in der Veröffentlichung "Chemical cross-linking of polypropylenes - towards new shape memory polymers" von T. Raidt, R. Höher, F. Katzenberg und J. C. Tiller in Macromol. Rapid Comm. 2015, 36, 744-749 offenbart wird.

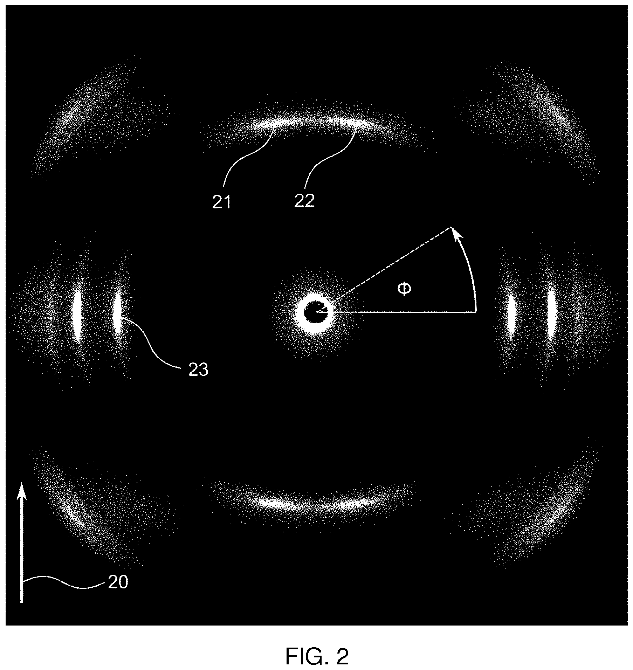

FIG. 2 zeigt das WAXS-Beugungsbild des in diesem Beispiel erhaltenen orientierten Polypropylens. Parallel zu der Verstreckungsrichtung 20 sind nicht nur die aus FIG. 1 bekannten Reflexe der in Verstreckungsrichtung ausgerichteten Kristallite (Mutterkristallite) zu erkennen. Neu hinzugekommen sind die Reflexe 21 und 22, welche der zusätzlichen Orientierung durch epitaktisch aufgewachsene Kristallite (Tochterkristallite) zugeordnet werden.

Ohne auf eine Theorie festgelegt zu sein wird angenommen, dass der Doppelreflex 21, 22 bei einem Azimutwinkel Φ von ca. 80° und ca. 100° der (110)-Netzebene der Tochterkristallite zugeordnet werden kann. Der mit dem Bezugszeichen 23 versehene Reflex bei einem Azimutwinkel Φ von ca. 180° kann der (110)-Netzebene der Mutterkristallite zugeordnet werden.

Durch Vergleich der WAXS-Reflexe mit denen von kommerziell erhältlichem biaxial orientiertem Polypropylen wurde bestätigt, dass im erfindungsgemäßen Verfahren eine biaxiale Orientierung erreicht wurde.

Beispiel 3 (Vergleichsbeispiel):

Es wurde analog zu Beispiel 2 verfahren, jedoch mit dem Unterschied, dass das Material bei 115 °C um 400% verstreckt wurde. Somit lag die Verstreckungstemperatur unterhalb des erfindungsgemäß vorgesehenen Bereichs.

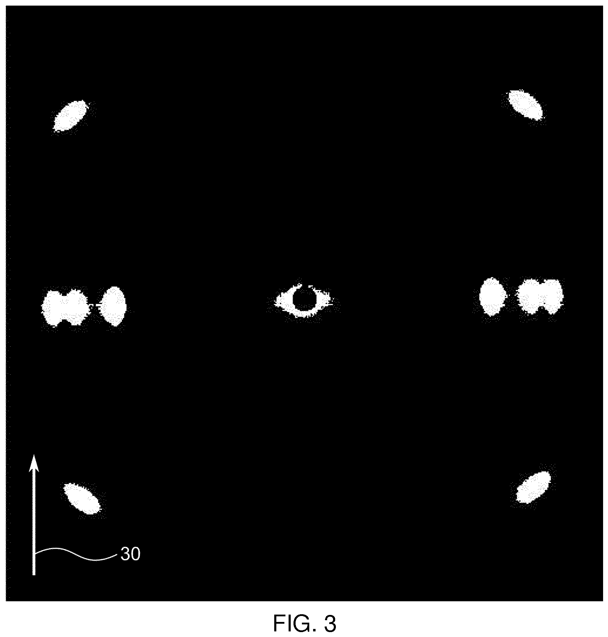

FIG. 3 zeigt das WAXS-Beugungsbild des so erhaltenen Produkts mit der angegebenen Verstreckungsrichtung 30. Wie aus dem Fehlen der Reflexe für die Tochterkristallite (vgl. FIG. 2) zu erkennen ist, wurde kein biaxial orientiertes Polypropylen erhalten.

Beispiel 4 (erfindungsgemäß):

In diesem Beispiel wurde das Verhältnis von Tochterkristalliten zu Mutterkristalliten aus der Integration der jeweiligen (110)-Reflexe der WAXS-Beugungsbilder, wie in Beispiel 2 erwähnt, in Abhängigkeit von der Dehnung in Schritt C) des erfindungsgemäßen Verfahrens untersucht. Das Material war das Gleiche wie in Beispiel 2 eingesetzt und die übrigen Versuchsbedingungen entsprachen ebenfalls denen in Beispiel 2. Die angegebenen Dehnungswerte verstehen sich als zuzüglich zur ursprünglichen Länge des Materials, d.h. eine angegebene Dehnung von 100% bedeutet eine Längenzunahme um 100% der ursprünglichen Länge.

Die Ergebnisse sind in der nachfolgenden Tabelle dargestellt, wobei der Eintrag "t/m" das Integralverhältnis der Tochterkristallitreflexe zu Mutterkristallitreflexen bezeichnet:

| Dehnung | 100% | 200% | 300% | 400% | 500% | 600% | 700% |
|---|---|---|---|---|---|---|---|
| t/m | 2.90 | 2.70 | 2.36 | 2.14 | 1.83 | 1.51 | 1.36 |

Somit lässt sich das t/m-Verhältnis durch die Wahl des Dehnungsgrads steuern.

Beispiel 5 (erfindungsgemäß):

In diesem Beispiel wurde das Verhältnis von Tochterkristalliten zu Mutterkristalliten in Abhängigkeit von der Dehnung bei einem etwas höher vernetzten iPP untersucht. Dazu wurde analog zum Vorgehen wie in Beispiel 2 beschrieben die Vernetzung von Novolen 1100 H mit 3 Gewichts-% Dicumylperoxid, 6 Gewichts-% Maleinsäureanhydrid, 5 Gewichtsprozent Zinkoxid, 3 Gewichts-% Glycidylmethacrylat und 3 Gewichts-% Tetramethylthiuramdisulfid durchgeführt. Das Netzkettenmolekulargewicht $M_c$ wurde zu 34200 g/mol bestimmt.

Die übrigen Versuchsbedingungen entsprachen denen in Beispiel 2. Die angegebenen Dehnungswerte verstehen sich als zuzüglich zur ursprünglichen Länge des Materials, d.h. eine angegebene Dehnung von 100% bedeutet eine Längenzunahme um 100% der ursprünglichen Länge.

Die Ergebnisse sind in der nachfolgenden Tabelle dargestellt, wobei der Eintrag "t/m" das Integralverhältnis der Tochterkristallitreflexe zu Mutterkristallitreflexen bezeichnet:

| Dehnung | 100% | 200% | 300% | 400% |
|---|---|---|---|---|
| t/m | 2.60 | 2.23 | 1.77 | 1.29 |

Somit lässt sich auch hier das t/m-Verhältnis durch die Wahl des Dehnungsgrads steuern.

Beispiel 6 (erfindungsgemäß):

Ein in Anlehnung an Beispiel 2 erhaltenes, aber in Schritt C) um 500% gedehntes Material wurde hinsichtlich seiner Steifigkeit in Verstreckungsrichtung (MD, machine direction) und quer hierzu (TD, transversal direction) untersucht. Der E-Modul in MD betrug 1550 MPa und in TD 1450 MPa. Das Verhältnis der Moduln in MD/TD betrug somit 1.069.

Zum Vergleich beträgt der E-Modul von Novolen 1100 H als unorientiertem Ausgangspolymer ca. 900 MPa. Das bei einer Dehnung um 700% erhaltene Material aus der Veröffentlichung "Chemical cross-linking of polypropylenes - towards new shape memory polymers" von T. Raidt, R. Höher, F. Katzenberg und J. C. Tiller in Macromol. Rapid Comm. 2015, 36, 744-749 hatte ein E-Modul in MD von 1250 MPa und in TD von 330 MPa, entsprechend einem Verhältnis der Moduln in MD/TD von 3.789.

**Patentansprüche**

**1.** Verfahren zur Herstellung eines orientierten Polymers, umfassend die Schritte:

A) Bereitstellen eines teilweise vernetzten Polymers,

wobei das teilweise vernetzte Polymer durch teilweises Vernetzen eines Ausgangspolymers erhalten wird,

das Ausgangspolymer als ein Polymer oder ein Blend von zwei oder mehreren Polymeren vorliegt, das Ausgangspolymer derart ausgewählt ist, dass es in der Lage ist, kristalline Domänen auszubilden, welche durch epitaktische Kristallisation auf anderen kristallinen Domänen des Ausgangspolymers entstanden sind und in einem Winkel von $\geq 50°$ bis $\leq 130°$ zu diesen anderen kristallinen Domänen vorliegen

und das teilweise vernetzte Polymer ein Netzkettenmolekulargewicht Mc, bezogen auf das zahlenmittlere Molekulargewicht des Ausgangspolymers $M_N$, von $\geq 0.25\ M_N$ bis $\leq 0.5\ M_N$, aufweist;

B) Erwärmen des teilweise vernetzten Polymers auf eine Temperatur, welche in Bezug auf den Schmelzpunkt $T_m$ des teilweise vernetzten Polymers $\geq T_m - 20\ °C$ bis $\leq T_m + 30\ °C$ beträgt;
C) Uniaxiales Verstrecken des nach Schritt B) vorliegenden erwärmten Polymers bei einer Temperatur von $\geq T_m - 40\ °C$ bis $\leq T_m + 30\ °C$;
D) Tempern des nach Schritt C) erhaltenen verstreckten Polymers, wobei das Polymer in Verstreckungsrichtung unter Spannung gehalten wird und das Tempern bei einer Temperatur von $\geq T_m - 60\ °C$ bis $< T_m$ für eine vorbestimmte Zeitdauer von $\geq 1$ Sekunde erfolgt.

2. Verfahren gemäß Anspruch 1, wobei in Schritt A) das teilweise vernetzte Polymer ein teilweise vernetztes isotaktisches Polypropylen ist.

3. Verfahren gemäß Anspruch 2, wobei das teilweise vernetzte isotaktische Polypropylen erhalten wird durch Umsetzung von isotaktischem Polypropylen mit einem Peroxid und einem cyclischen ungesättigten Carbonsäureanhydrid, gefolgt von der Umsetzung des erhaltenen Zwischenprodukts mit Glycidyl(meth)acrylat und Tetramethylthiuramdisulfid in Gegenwart von Zinkoxid.

4. Verfahren gemäß einem der Ansprüche 1 bis 3, wobei in Schritt C) das Polymer um $\geq 100\%$ bis $\leq 800\%$ seiner ursprünglichen Ausdehnung in Verstreckungsrichtung verstreckt wird.

5. Verfahren gemäß einem der Ansprüche 1 bis 4, wobei in Schritt C) das Polymer auf eine Dicke von $\geq 0.01$ mm bis $\leq 1$ m verstreckt wird.

6. Verfahren gemäß einem der Ansprüche 1 bis 4, wobei in Schritt D) das verstreckte Polymer unter Spannung um $\geq 100\%$ bis $\leq 1500\%$ seiner ursprünglichen Ausdehnung in Verstreckungsrichtung gehalten wird.

7. Verfahren gemäß einem der Ansprüche 1 bis 6, wobei nach Schritt D) das Polymer auf Raumtemperatur abgekühlt wird.

8. Verfahren gemäß einem der Ansprüche 1 bis 7, wobei nach Schritt D) die Schritte C) und D) erneut durchgeführt werden und wobei in dem erneut durchgeführten Schritt C) das Ausmaß der Verstreckung des Polymers größer ist als in dem zuerst durchgeführten Schritt C).

9. Bi- oder multiaxial orientiertes Polymer, erhältlich durch ein Verfahren gemäß einem der Ansprüche 1 bis 7, wobei das Polymer teilweise vernetzt ist, ein Netzkettenmolekulargewicht Mc, bezogen auf das zahlenmittlere Molekulargewicht seines unvernetzten Ausgangspolymers $M_N$, von $\geq 0.25\ M_N$ bis $\leq 0.5\ M_N$, aufweist, **dadurch gekennzeichnet, dass** das Polymer ein Verhältnis des Elastizitätsmoduls in Verstreckungsrichtung zum Elastizitätsmodul quer zur Verstreckungsrichtung von $\geq 0.7{:}1$ bis $\leq 1.5{:}1$ aufweist.

10. Polymer gemäß Anspruch 9, wobei das Polymer als Formkörper mit einer Dicke von $\geq 0.01$ mm bis $\leq 1$ m vorliegt.

11. Polymer gemäß Anspruch 9 oder 10, wobei das Polymer ein isotaktisches Polypropylen ist.

12. Polymer gemäß einem der Ansprüche 9 bis 11, wobei im Weitwinkel-Röntgenstreuungsdiagramm (Cu-$K_\alpha$) das Integralverhältnis der Schar an Äquatorreflexen (hk0) von Kristalliten, welche in einem Winkel von $\geq 50°$ bis $\leq 130°$ zur Verstreckungsrichtung orientiert sind, zur Schar an Äquatorreflexen (hk0) von Kristalliten, welche in Verstre-

ckungsrichtung orientiert sind, $\geq$ 0.8:1 bis $\leq$ 4:1 beträgt.

**13.** Polymer gemäß Anspruch 11 oder 12, wobei das isotaktische Polypropylen vernetzt wird durch Umsetzung von isotaktischem Polypropylen mit einem Peroxid und einem cyclischen ungesättigten Carbonsäureanhydrid, gefolgt von der Umsetzung des erhaltenen Zwischenprodukts mit Glycidyl(meth)acrylat und Tetramethylthiuramdisulfid in Gegenwart von Zinkoxid.

**14.** Verwendung eines Polymers gemäß einem der Ansprüche 9 bis 13 als Konstruktionsmaterial.

**Claims**

**1.** Process for the production of an oriented polymer, comprising the steps of:

A) provision of a partially crosslinked polymer,

where the partially crosslinked polymer is obtained via partial crosslinking of a starting polymer material,

the starting polymer material takes the form of a polymer or of a blend of two or more polymers,
the selection of the starting polymer material is such that it is capable of forming crystalline domains which have been produced via epitactic crystallization on other crystalline domains of the starting polymer material and are within an angular range of from $\geq$ 50° to $\leq$ 130° with respect to the said other crystalline domains,

and the network-chain molecular weight $M_C$ of the partially crosslinked polymer, based on the number-average molecular weight of the starting polymer material $M_N$, is from $\geq$ 0.25 $M_N$ to $\leq$ 0.5 $M_N$;

B) heating of the partially crosslinked polymer to a temperature which, based on the melting point $T_m$ of the partially crosslinked polymer, is from $\geq T_m$ - 20°C to $\leq T_m$ + 30°C;
C) monoaxial stretching, at a temperature of from $\geq T_m$ - 40°C to $\leq T_m$ + 30°C, of the heated polymer present after step B);
D) heat-conditioning of the stretched polymer obtained after step C), where the polymer is held under tension in stretching direction and the heat-conditioning takes place at a temperature of from $\geq T_m$ - 60°C to $< T_m$ for a predetermined period of $\geq$ 1 second.

**2.** Process according to Claim 1, where in step A) the partially crosslinked polymer is a partially crosslinked isotactic polypropylene.

**3.** Process according to Claim 2, where the partially crosslinked isotactic polypropylene is obtained via reaction of isotactic polypropylene with a peroxide and a cyclic unsaturated carboxylic anhydride followed by reaction of the resultant intermediate product with glycidyl (meth)acrylate and tetramethylthiuram disulphide in the presence of zinc oxide.

**4.** Process according to any of Claims 1 to 3, where in step C) the polymer is stretched to an extent of from $\geq$ 100% to $\leq$ 800% of its original dimension in stretching direction.

**5.** Process according to any of Claims 1 to 4, where in step C) the polymer is stretched to a thickness of $\geq$ 0.01 mm to $\leq$ 1 m.

**6.** Process according to any of Claims 1 to 4, where in step D) the stretched polymer is held under tension to an extent of from $\geq$ 100% to $\leq$ 1500% of its original dimension in stretching direction.

**7.** Process according to any of Claims 1 to 6, where after step D) the polymer is cooled to room temperature.

**8.** Process according to any of Claims 1 to 7, where after step D) the steps C) and D) are repeated, and where in the repeated step C) the extent to which the polymer is stretched is greater than in the first step C).

**9.** Bi- or multiaxially oriented polymer obtainable via a process according to any of Claims 1 to 7, where the polymer has been partially crosslinked, and its network-chain molecular weight $M_C$, based on the number-average molecular weight of its uncrosslinked starting polymer material $M_N$, is from $\geq 0.25\ M_N$ to $\leq 0.5\ M_N$, **characterized in that**, for the polymer, the ratio of modulus of elasticity in stretching direction to modulus of elasticity perpendicularly to the stretching direction is from $\geq 0.7{:}1$ to $\leq 1.5{:}1$.

10. Polymer according to Claim 9, where the polymer takes the form of moulding with thickness from $\geq 0.01$ mm to $\leq 1$ m.

11. Polymer according to Claim 9 or 10, where the polymer is an isotactic polypropylene.

12. Polymer according to any of Claims 9 to 11, where, in the wide-angle X-ray diffraction pattern (Cu-K$_\alpha$), the integral ratio of the family of equatorial reflections (hk0) of crystallites oriented within an angular range of from $\geq 50°$ to $\leq 130°$ with respect to stretching direction to the family of equatorial reflections (hk0) of crystallites oriented in stretching direction is from $\geq 0.8{:}1$ to $\leq 4{:}1$.

13. Polymer according to Claim 11 or 12, where the isotactic polypropylene is crosslinked via reaction of isotactic polypropylene with a peroxide and a cyclic unsaturated carboxylic anhydride followed by the reaction of the resultant intermediate product with glycidyl (meth)acrylate and tetramethylthiuram disulphide in the presence of zinc oxide.

14. Use of a polymer according to any of Claims 9 to 13 as construction material.

**Revendications**

1. Procédé pour la préparation d'un polymère orienté, comprenant les étapes :

   A) mise à disposition d'un polymère partiellement réticulé,
   le polymère partiellement réticulé étant obtenu par réticulation partielle d'un polymère de départ,
   le polymère de départ se trouvant sous forme d'un polymère ou d'un mélange de deux polymères ou plus, le polymère de départ étant choisi de manière telle qu'il est en mesure de former des domaines cristallins qui sont formés par cristallisation épitactique sur d'autres domaines cristallins du polymère de départ et qui se trouvent sous un angle de $\geq 50°$ à $\leq 130°$ par rapport à ces autres domaines cristallins
   et le polymère partiellement réticulé présentant un poids moléculaire de chaînes réticulées $M_C$, par rapport au poids moléculaire moyen en nombre du polymère de départ $M_N$, de $\geq 0,25\ M_N$ à $\leq 0,5\ M_N$ ;
   B) chauffage du polymère partiellement réticulé à une température qui, par rapport au point de fusion $T_m$ du polymère partiellement réticulé, est de $\geq T_m\text{-}20°C$ à $\leq T_m\text{+}30°C$ ;
   C) étirage uniaxial du polymère chauffé obtenu après l'étape B) à une température de $\geq T_m\text{-}40°C$ à $\leq T_m\text{+}30°C$ ;
   D) équilibrage thermique du polymère étiré obtenu après l'étape C), le polymère étant maintenu sous tension dans la direction d'étirage et l'équilibrage thermique ayant lieu à une température de $\geq T_m\text{-}60°C$ à $\leq T_m$ pendant une durée prédéterminée de $\geq 1$ seconde.

2. Procédé selon la revendication 1, le polymère partiellement réticulé dans l'étape A) étant un polypropylène isotactique partiellement réticulé.

3. Procédé selon la revendication 2, le polypropylène isotactique partiellement réticulé étant obtenu par transformation de polypropylène isotactique avec un peroxyde et un anhydride d'acide carboxylique cyclique insaturé, suivie de la transformation du produit intermédiaire obtenu avec du (méth)acrylate de glycidyle et du disulfure de tétraméthylthiuram en présence d'oxyde de zinc.

4. Procédé selon l'une quelconque des revendications 1 à 3, le polymère dans l'étape C) étant étiré de $\geq 100\%$ à $\leq 800\%$ de sa dimension initiale dans la direction d'étirage.

5. Procédé selon l'une quelconque des revendications 1 à 4, le polymère dans l'étape C) étant étiré à une épaisseur de $\geq 0,01$ mm à $\leq 1$ m.

6. Procédé selon l'une quelconque des revendications 1 à 4, le polymère étiré dans l'étape D) étant maintenu sous une tension de $\geq 100\%$ à $\leq 1500\%$ de sa dimension initiale dans la direction d'étirage.

7. Procédé selon l'une quelconque des revendications 1 à 6, le polymère étant refroidi à température ambiante après l'étape D).

**8.** Procédé selon l'une quelconque des revendications 1 à 7, les étapes C) et D) étant de nouveau réalisées après l'étape D) et le niveau de l'étirage du polymère dans l'étape C) de nouveau réalisée étant supérieur à celui dans la première étape C) réalisée.

**9.** Polymère orienté de manière biaxiale ou multiaxiale, pouvant être obtenu par un procédé selon l'une quelconque des revendications 1 à 7, le polymère étant partiellement réticulé, présentant un poids moléculaire de chaînes réticulées $M_C$, par rapport au poids moléculaire moyen en nombre de son polymère de départ non réticulé $M_N$, de $\geq 0,25\,M_N$ à $\leq 0,5\,M_N$, **caractérisé en ce que** le polymère présente un rapport du module d'élasticité dans la direction d'étirage au module d'élasticité transversalement par rapport à la direction d'étirage de $\geq 0,7{:}1$ à $\leq 1,5{:}1$.

**10.** Polymère selon la revendication 9, le polymère se trouvant sous forme de corps façonné d'une épaisseur de $\geq 0,01$ mm à $\leq 1$ m.

**11.** Polymère selon la revendication 9 ou 10, le polymère étant un polypropylène isotactique.

**12.** Polymère selon l'une quelconque des revendications 9 à 11, où, dans un diagramme de diffraction de rayons X à grand angle (Cu-Ka), le rapport intégral de l'assemblage de réflexions d'équateur (hk0) de cristaux, qui sont orientés sous un angle de $\geq 50°$ à $\leq 130°$ par rapport à la direction d'étirage, à l'assemblage de réflexions d'équateur (hk0) de cristaux qui sont orientés dans la direction d'étirage étant de $\geq 0,8{:}1$ à $\leq 4{:}1$.

**13.** Procédé selon la revendication 11 ou 12, le polypropylène isotactique étant réticulé par transformation de polypropylène isotactique avec un peroxyde et un anhydride d'acide carboxylique cyclique insaturé, suivie de la transformation du produit intermédiaire obtenu avec du (méth)acrylate de glycidyle et du disulfure de tétraméthylthiuram en présence d'oxyde de zinc.

**14.** Utilisation d'un polymère selon l'une quelconque des revendications 9 à 13 comme matériau de construction.

FIG. 1

FIG. 2

FIG. 3

# EP 3 098 059 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19946949 A1
- GB 1276023 A1

- US 5970589 A


**In der Beschreibung aufgeführte Nicht-Patentliteratur**

- **YAMADA, K. ; MATSUMOTO, S. ; TAGASHIRA, K. ; HIKOSAKA, M.** Isotacticity dependence of spherulitic morphology of isotactic polypropylene. *Polymer,* 1998, vol. 39, 5327
- **GAHLEITNER, M. et al.** Nucleation of polypropylene homo- and copolymers. *Intern. Polymer Processing XXVI,* 2011

- **PETERMANN, J. ; XU, Y.** The origin of heteroepitaxy in the system of uniaxially oriented isotactic polypropylene and polyethylene. *Journal of Materials Science,* 1991, vol. 26, 1211-1215
- **T. RAIDT ; R. HÖHER ; F. KATZENBERG ; J. C. TILLER.** Chemical cross-linking of polypropylenes - towards new shape memory polymers. *Macromol. Rapid Comm.,* 2015, vol. 36, 744-749